(19) **Europäisches Patentamt**
**European Patent Office**
**Office européen des brevets**

(11) **EP 1 936 563 A1**

(12) **EUROPEAN PATENT APPLICATION**

(43) Date of publication:
**25.06.2008 Bulletin 2008/26**

(51) Int Cl.:
**G06T 3/00** (2006.01)

(21) Application number: **06301269.4**

(22) Date of filing: **19.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Thomson Licensing**
**92100 Boulogne-Billancourt (FR)**

(72) Inventors:
• **Hassenpflug, Frank**
**78052 VS-Tannheim (DE)**

• **Grimm, Günter**
**78652 Deißlingen (DE)**
• **Endress, Wolfgang**
**78050 VS-Villingen (DE)**

(74) Representative: **Lindemann, Robert**
**Deutsche Thomson-Brandt GmbH**
**European Patent Operations**
**Karl-Wiechert-Allee 74**
**30625 Hannover (DE)**

(54) **Method for rotating and scaling an image and corresponding apparatus**

(57) An improved method and apparatus shall be provided for rotating and scaling an image. According to the suggested method an original image having a first and a second dimension (u, v) is scaled in the first dimension (v) to obtain a first processing image (INTER_Image_0) in a first computation step. In a second computation step the first processing image (INTER_Image_0) is scaled in the second dimension (u) and simultaneously sheared depending on a given rotation angle to obtain a second processing image (INTER_Image_1). A final third computation step serves for shearing the second processing image (INTER_Image_1) depending on the given rotation angle in the first dimension (v) to obtain a scaled rotated image (OUT Image). The complete rotation and scaling only needs three processing steps.

Fig. 3

**Description**

The present invention relates to a method and an apparatus for rotating an original image having two-dimensions.

Background

Image rotation of digital images needs a lot of computing power, especially if the rotation shall be performed through another angle than +90°, -90° or 180°. In order to reduce the hardware complexity such rotation is usually performed with so called scan-line methods. George Wolberg, "Digital Image Warping", IEEE Computer Society Press, Los Alamitos, CA USA, pp. 205 - 208, 1994, presents a short description of rotation algorithms, developed by Edwin Catmull and Alvy Ray Smith, Alan W. Paeth, Carl F. R. Weiman working with a scanline approach. But all of them are conducting only a rotation and no scaling of the incoming image. For scaling two additional processing units (horizontal, vertical) are necessary. A lot of processing units cause more artifacts within the outgoing image. The Weiman approach for rotation only is working with 4 processing steps, the Paeth with 3 and the Catmull/Smith with 2. The least processing steps (only 4) while doing a rotation and scaling has the Catmull/Smith approach.

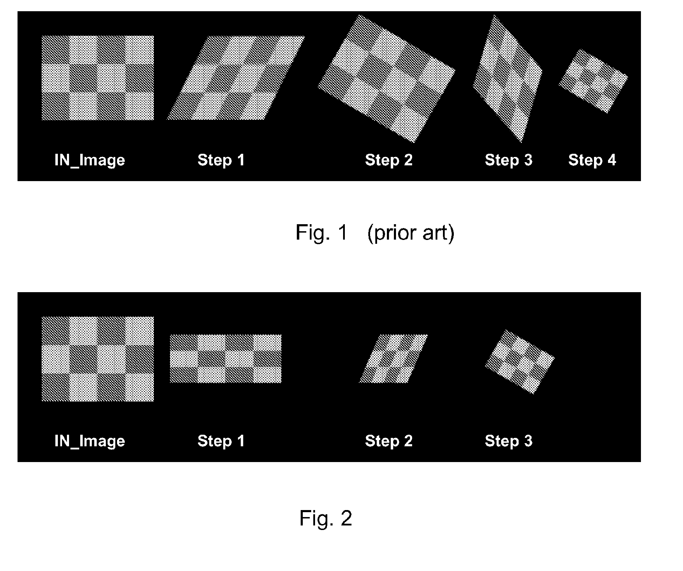

Fig. 1 illustrates the rotation and scaling of an image according to the prior art. The image rotation is performed according to the algorithm of Catmull/Smith using two processing steps: step 1 and step 2. In step 1 the input image (original image) is sheared and format corrected in the horizontal direction. In step 2 the sheared image is further sheared and format corrected in the vertical direction so that a rotated image of the same size as the original image will be obtained. After these two steps of rotation two further steps for scaling have to be added: step 3 and step 4. In step 3 the image of step 2 is scaled horizontally and in step 4 the image is further scaled in a vertical direction resulting in a rotated and scaled image.

A further method for rotating images is disclosed in EP 0 396 311 B1. An original image is rotated by employing three steps: a scaling step, a horizontal shear step and a vertical shear step. Is additionally horizontal and vertical scaling necessary, altogether five steps have to be performed to achieve the desired picture. However, this great number of processing steps reduces the picture quality.

Invention

In view of that it is the object of the present invention to provide a method and an apparatus which enable high quality image rotation and scaling.

According to the present invention this object is coped by a method for rotating an original image having a first and a second dimension including

- a first computation step for scaling said original image in said first dimension to obtain a first processing image,

- a second computation step for scaling said first processing image in said second dimension and simultaneously for shearing said first processing image depending on a given rotation angle in said second dimension to obtain a second processing image and

- a third computation step for shearing said second processing image depending on said given rotation angle in said first dimension to obtain a scaled rotated image.

Furthermore, according to the present invention there is provided an apparatus for rotating an original image having a first and a second dimension including

- first scaling means for scaling said original image in said first dimension to obtain a first processing image,
- second scaling means for scaling said first processing image in said second dimension and simultaneously for shearing said first processing image depending on a given rotation angle in said second dimension to obtain a second processing image and
- shearing means for shearing said second processing image depending on a given rotation angle in said first dimension to obtain a scaled rotated image.

The major advantage of the present invention is that a high quality approach is provided for an image rotation with integrated image scaling. The image can be rotated about +/-180°. The scaling factor is theoretically greater than 0 or infinite, but there is a limit given by the data type realized in the hardware or software implementation. Primarily, the high quality is achieved by the low number of processing steps, i.e. only three steps instead of four or five for rotation and scaling.

Advantageously 1-D-filters can be used within the scan line approach. Actually the filtering for the calculation of outgoing pixel values may be done by three one-dimensional filters. The length (taps) of the filters and the amount of relative positions between two pixels (subphases) of the filters are variable. They depend on the filter types to be implemented. The 1-D-processing of the original image may be performed line-by-line or column-by-column.

Preferably, the first computation step of the inventive method is performed according to the matrix

$$\begin{bmatrix} 1 & 0 \\ 0 & \dfrac{z_1}{\cos(\alpha)} \end{bmatrix},$$

the second computation step is performed according to the matrix

$$\begin{bmatrix} z_2 \cdot \cos(\alpha) & 0 \\ \sin(\alpha) \cdot \cos(\alpha) & 1 \end{bmatrix},$$

and the third computation step is performed according to the matrix

$$\begin{bmatrix} 1 & -\tan(\alpha) \\ 0 & 1 \end{bmatrix},$$

wherein $z_1$ is a scaling factor for the first dimension and $z_2$ is a scaling factor for the second dimension. This enables in the first step a scaling in the first dimension, a combined scaling and shearing in the second step and a second shearing in the third step.

A rotation for an absolute value of more than 45° may be performed in two subrotations: a first subrotation through an absolute value of less than 45° (+/- 45°) and a second subrotation value +90°, -90° or 180°. Thus, a so called "bottle-neck effect" when performing the rotation with two shearing steps can be avoided. Specifically, the first subrotation may be performed according to the first to third computation steps of the inventive method and the second subrotation may be performed without scaling by two-dimensional transformation. By doing so each rotation can be realized like a high quality rotation in the range of +/-45°.

Drawings

The present invention will be explained in more detail along with the following drawings showing in:

Fig. 1    an image rotation and scaling of an image according to the prior art;

Fig. 2    an image rotation and scaling according to the present invention with only three steps;

Fig. 3    the processing steps of a +30° rotation and half size scaling, starting with a column like in Fig. 2, but in more detail;

Fig. 4    an implementation of the processing steps of Fig. 3;

Fig. 5    the processing steps of a +30° rotation and half size scaling, starting with a line;

Fig. 6    an implementation of the processing steps of Fig. 5;

Fig. 7    a shear angle of Catmull/Smith and of the inventive method for a +45° rotation;

Fig. 8    a +80° rotation and half size scaling by Catmull/Smith;

Fig. 9     a +80° rotation and half size scaling according to the present invention and

Fig. 10    a flow-chart for performing subrotations.

Exemplary embodiments

In the following preferred embodiments of the present invention are introduced.

The example of Fig. 2 shows a +30 ° rotation and half size scaling of an input image (IN_Image) according to the present invention. Only three steps are necessary to achieve the rotated and scaled high quality image. According to the example of Fig. 2 the input image is vertically scaled in step 1. In following step 2 horizontal scaling together with a horizontal shearing is performed. Finally, in step 3 the complementary shearing in vertical direction is carried out.

The theory of this combined image rotation and scaling is as follows: each point within a coordinate system (u; v) can be transformed to other positions by several transforming matrices. For the rotation and scaling of an image lying in this coordinate system, the general rotation/scaling matrix

$$R = \begin{bmatrix} ZoomH \cdot \cos(\alpha) & -ZoomH \cdot \sin(\alpha) \\ ZoomV \cdot \sin(\alpha) & ZoomV \cdot \cos(\alpha) \end{bmatrix}$$

is used, wherein $\alpha$ is the rotation angle, ZoomH is the overall horizontal scaling factor and ZoomV the overall vertical scaling factor. Within the present document ZoomH can be commonly regarded as a zoom-factor $z_1$ in a first dimension and ZoomV as a zoom-factor $z_2$ in a second dimension.

Now, an incoming pixel (u;v) shall be transformed to an outgoing pixel (x;y) wherein u is the horizontal position of the incoming pixel, v is the vertical position of the incoming pixel, x is the horizontal position of the outgoing pixel and y is the vertical position of the outgoing pixel. The transformation is carried out according to the following equation

$$[x, y] = [u, v] \cdot R = [u, v] \cdot \begin{bmatrix} ZoomH \cdot \cos(\alpha) & -ZoomH \cdot \sin(\alpha) \\ ZoomV \cdot \sin(\alpha) & ZoomV \cdot \cos(\alpha) \end{bmatrix}$$

$$\Rightarrow$$

$$x = u \cdot ZoomH \cdot \cos(\alpha) + v \cdot ZoomV \cdot \sin(\alpha)$$
$$y = -u \cdot ZoomH \cdot \sin(\alpha) + v \cdot ZoomV \cdot \cos(\alpha)$$

As a result the horizontal position x and the vertical position y of the outgoing pixels can be calculated on the basis of the horizontal and vertical scaling factors ZoomH and ZoomV and the rotation angle $\alpha$.

A rotation and scaling in one step as described in the matrix above is not easy to implement in hardware. A scan line approach is easier to implement, but the general rotation/scaling matrix must be divided into three sub matrices. The following matrices are used for this approach:

$$R = R_{v0} \cdot R_{h0} \cdot R_{v1} = \begin{bmatrix} 1 & 0 \\ 0 & \dfrac{ZoomV}{\cos(\alpha)} \end{bmatrix} \cdot \begin{bmatrix} ZoomH \cdot \cos(\alpha) & 0 \\ \sin(\alpha) \cdot \cos(\alpha) & 1 \end{bmatrix} \cdot \begin{bmatrix} 1 & -\tan(\alpha) \\ 0 & 1 \end{bmatrix}$$

$$= \begin{bmatrix} ZoomH \cdot \cos(\alpha) & -ZoomH \cdot \sin(\alpha) \\ ZoomV \cdot \sin(\alpha) & ZoomV \cdot \cos(\alpha) \end{bmatrix}$$

The first matrix $R_{v0}$ represents the vertical scaling according to processing step 1 (cf. Fig. 2). The second matrix $R_{h0}$ represents the horizontal scaling and the horizontal shearing according to step 2. Finally, the matrix $R_{v1}$ represents the vertical shearing corresponding to step 3.

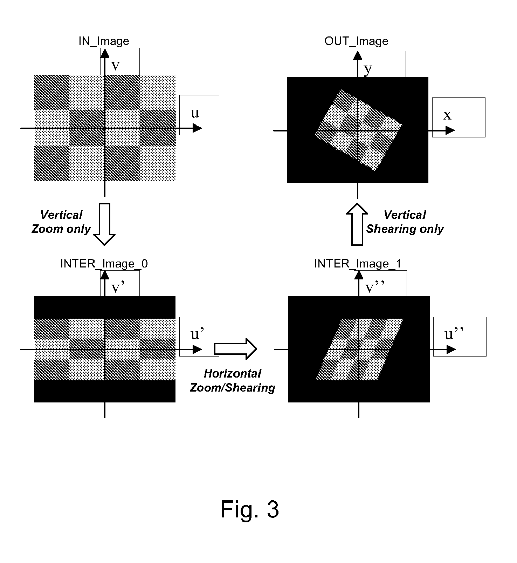

The above described general rotation matrix shall now be implemented in a rotation/scaling unit. The implementation will be effectuated on the basis of the above defined submatrices. So said scan-line processing is enabled. For this each processing step will be described in more detail together with Fig. 3.

The first processing step (step 1; cf. Fig. 2) calculates a vertical overall Zoom combined with format correction (shortening due to the rotation angle) caused by the rotation of the IN_Image. The second one (step 2) calculates a horizontal overall Zoom, format correction and horizontal shearing of the INTER Image 0. The last one (step 3) is doing a vertical shearing of INTER Image 1 and if necessary a store rotation (described later). The result is a rotated and scaled OUT_Image.

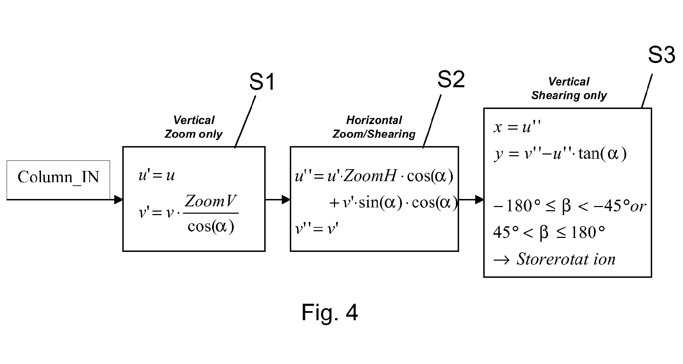

As can be seen in Fig. 3 the coordinates change with each processing step. The IN_Image is plotted with the coordinates, u, v, the INTER_Image_0 is plotted with the coordinates u', v', the INTER_Image_1 is plotted with the coordinates u", v" and the OUT_Image is plotted with the coordinates x, y. With theses coordinates the transformation or processing steps can be written as depicted in Fig. 4. Each of the boxes of Fig. 4 represents a processing step of Fig. 3. Processing step S1 corresponds to the vertical zoom of Fig. 3. The equations of box S1 can be deduced from matrix $R_{v0}$. Step 2 represents the horizontal zoom/shearing of Fig. 3 and the equations of box S2 can be deduced from matrix $R_{h0}$. Moreover, step S3 represents the vertical shearing of Fig. 3 and the equations for the coordinates x and y can be deduced from matrix $R_{v1}$. If the absolute value of the intended rotation is more than 45° (+/- 45°), the rotation is not only performed by shearing and format correction, but also by a so called store rotation. This store rotation is a simple mirror transformation which can be performed without filtering in a memory. It will be explained in more detail below.

The processing steps S1, S2, and S3 of fig. 4 can also symbolize first scaling means S1, second scaling means S2 (including a shearing function) and shearing means S3. With this understanding Fig. 4 represents an apparatus for rotating and scaling.

As mentioned above the rotation and scaling is done by a scan-line image processing. In the example of fig. 4 the 1-D input data are columns Column_IN.

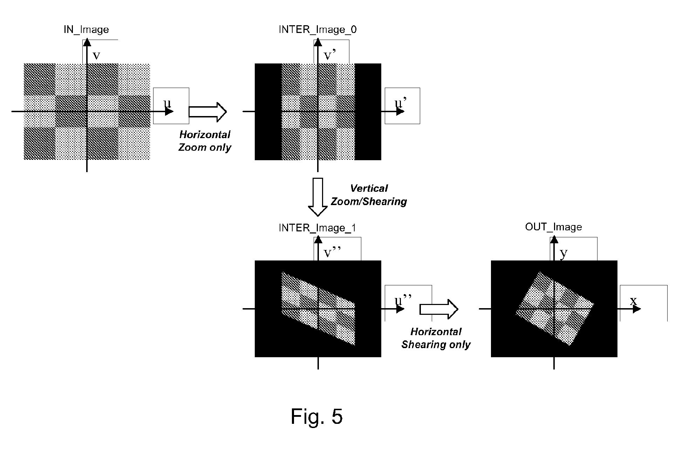

It is also possible to start the processing with a line of an image instead of a column. Fig. 5 shows this processing. The first step calculates a horizontal overall Zoom combined with format correction caused by the rotation of the IN_ Image. The second one calculates a vertical overall Zoom, format correction and vertical shearing of the INTER_Image_ 0. The last one is doing a horizontal shearing of INTER_Image_1 and, if necessary, a store rotation. The result is a rotated and scaled OUT_Image (Fig. 5).

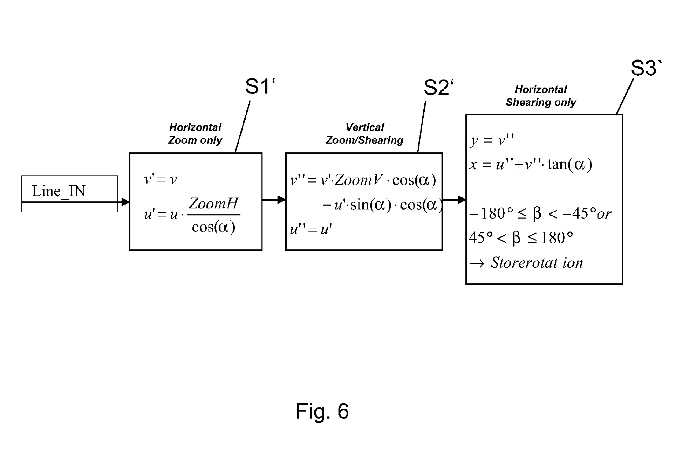

Similar to the implementation of the process of Fig. 3 with a method or an apparatus symbolized in Fig. 4, the process of Fig. 5 starting with a line of the image can be implemented in a method or an apparatus as shown in Fig. 6. An input line Line IN is provided to a block S1' representing the first computation step or the first scaling means, respectively. Since only a horizontal zooming is performed, the vertical dimension v is kept unchanged. The equations of box S1' can be derived from submatrix $R_{v0}$ wherein ZoomV is replaced by ZoomH. Similarly, box S2' represents the second computation step or the second scaling means for combined scaling and shearing. The equations can be derived from submatrix $R_{H0}$ analogically. After the vertical shearing in box S2' a horizontal shearing is necessary in box S3' representing the third computation step or the shearing means, respectively. The equations of box S3' can again be derived from submatrix $R_{v1}$. A store rotation similar to that of Fig. 4 is also performed, if necessary.

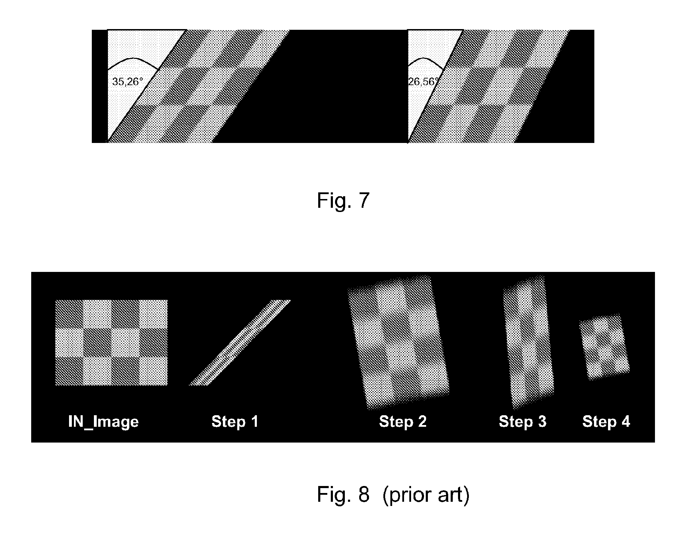

A positive aspect of the present invention can be seen in Fig. 7. On the left side the horizontal shearing step of Catmull/Smith is shown for a rotation angle of 45°. A shearing angle of 35,26° is necessary. On the right side of Fig. 7 the shear angle of the present invention for a rotation angle of 45° is shown. The shear angle here is 26, 56° only. Therefore, because of the vertical processing, the pixels originally lying one below the other are further displaced when using the method of Catmull/Smith. The maximum displacement for the present invention is 0,5 pixel, whereas the maximum displacement of Catmull/Smith is 0,707 pixel. Due to this enlarged shearing angle the image needs a bigger image memory and the image quality of the output picture might become worse.

A further positive aspect of the present invention is that the so called bottle-neck problem is reduced. As shown in Fig. 8, bit angles of rotation cause small intermediate images. In the example of Fig. 8 a +80° rotation and half size scaling is performed with a Catmull/Smith algorithm. The intermediate image of step 1 is very small and a lot of information is lost. Therefore, the intermediate image of step 2 is rather blurred. Consequently the output image in step 4 has low quality.

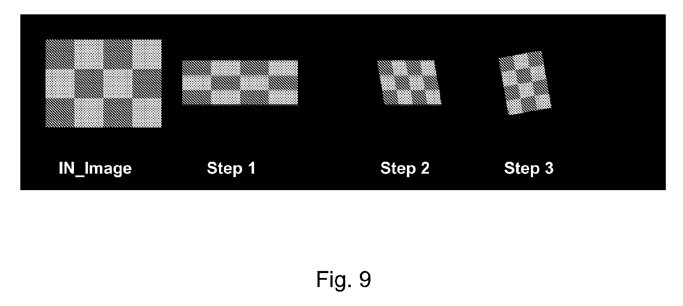

In contrast to that a +80° rotation and half size scaling with the algorithm of the present invention does not lead to a low quality image as shown in Fig. 9. In this approach the format correction and shearing of the intermediate images is only done in a rotation angle range of +/-45°. This decreases the bottleneck problem. All the other angles are created by intermediate image rotations within this range and a subsequent rotation of +/-90° or 180° of these prerotated images in an image store. Furthermore, this algorithm causes less filtering and image warping artifacts. The desired angle Rot_ angle_in (β) is changed by calculation into the rotation angle Rot_angle (α) used for all other calculations of this approach. This process also contains a second calculation, if the intermediate image must be rotated by +/-90° or 180° within the image store.

A corresponding signal Rot_90_180 for indicating the necessity of such store rotation may be generated as in the example of the following table

**Table 1: Rot_90_180 store rotation signal sets**

| Rot 90_180 [0:1] | Process within image store |
| --- | --- |
| 00 | No Rotation |
| 01 | +90° Rotation |
| 10 | -90° Rotation |
| 11 | 180° Rotation |

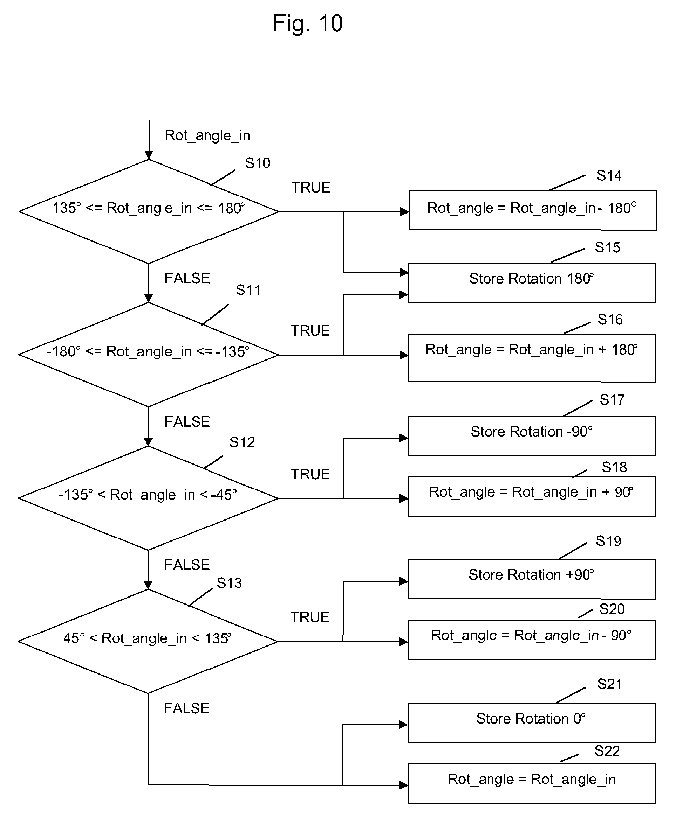

The calculation of these parameters is described with the flowchart of Fig. 10.

The input rotation angle Rot_angle_in is analysed in four analysing steps S10, S11, S12, and S13. If the input rotation angle Angle_IN is between 135° and 180° the rotation angle Rot_angel of the first subrotation is determined to be Rot_angel_In -180° according to step S14. The second subrotation will be a store rotation of 180°.

If the input rotation angle Rot angle In is between -180° and -135°, the rotation angel Rot_angle of the first subrotation is determined to be Rot angle In +180°. The second subrotation again is the store rotation of 180° given in step S15.

If the input rotation angle Rot angle In is between -135° and -45°, step S12 determines that the rotation angle Rot_angle is Rot_angle_In +90° according to step S18. Furthermore, the second subrotation is a store rotation of -90° according to step S17.

Moreover, if it is true in step S13 that the input rotation angle Rot_angle_In is between 45° and 135°, the rotation angle Rot_angle of the first subrotation is determined to be Rot angle In -90° in step S20. The second subrotation will be a store rotation of +90° according to step S19.

Otherwise, if none of the analysing steps S10 to S13 is true the input rotation angle Rot angle In lies between -45° and 45°, so that the rotation angle Rot_angle of the first subrotation is Rot_angle_In according to step S22. A second subrotation is not necessary as given by step S21.

The advantage of the described embodiments is the reduced processing time resulting from the reduced number of steps, which internally enhances the picture quality due to lower loss of information given by each processing step. A further advantage is that also bigger rotation angles may be realized without loss of image quality (compare bottle-neck problem).

**Claims**

1. Method for rotating and scaling an original image (IN_Image) having a first and a second dimension (u, v) including

   - a first computation step (S1) for scaling said original image (IN_Image) in said first dimension to obtain a first processing image (INTER_Image_0),
   - a second computation step (S2) for scaling said first processing image (Inter_Image_0) in said second dimension and simultaneously for shearing said first processing image (INTER Image 0) depending on a given rotation angle ($\alpha$) in said second dimension to obtain a second processing image (INTER_Image_1) and
   - a third computation step (S3) for shearing said second processing image (INTER_Image_1) depending on said given rotation angle in said first dimension to obtain a scaled rotated image (OUT_Image).

2. Method according to claim 1, wherein said original image (IN_Image) is processed line-by-line or column-by-column.

3. Method according to claim 1 or 2, wherein said first computation step (S1) is performed according to the matrix

$$\begin{bmatrix} 1 & 0 \\ 0 & \dfrac{z_1}{\cos(\alpha)} \end{bmatrix},$$

said second computation step is performed according to the matrix

$$\begin{bmatrix} z_2 \cdot \cos(\alpha) & 0 \\ \sin(\alpha) \cdot \cos(\alpha) & 1 \end{bmatrix}$$

and said third computation step is performed according to the matrix

$$\begin{bmatrix} 1 & -\tan(\alpha) \\ 0 & 1 \end{bmatrix},$$

wherein $z_1$ is a scaling factor for the first dimension and $z_2$ is a scaling factor for the second dimension.

4. Method according to one of the preceding claims, wherein a rotation for an absolute value of more than 45° is performed by two subrotations:

   - a first subrotation for an absolute value of less than 45° and
   - a second subrotation for +90°, -90° or 180°.

5. Method according to claim 4, wherein said first subrotation is performed according to said first to third computation steps (S1 to S3) and said second subrotation is performed without scaling by two-dimensional transformation.

6. Apparatus for rotating an original image having a first and a second dimension (u, v) including

   - first scaling means for scaling said original image (IN_Image) in said first dimension to obtain a first processing image (INTER_Image_O),
   - second scaling means for scaling said first processing image in said second dimension and simultaneously for shearing said first processing image (INTER_Imgage_0) depending on a given rotation angle ($\alpha$) in said second dimension to obtain a second processing image (INTER_Image_1) and
   - shearing means for shearing said second processing image (INTER_Image_1) depending on a given rotation angle in said first dimension to obtain a scaled rotated image (OUT Image).

7. Apparatus according to claim 6, wherein said first scaling means, said second scaling means and said shearing means process the original image (IN_Image) line-by-line or column-by-column.

8. Apparatus according to claim 6 or 7, wherein said first scaling means operates according to the matrix

$$\begin{bmatrix} 1 & 0 \\ 0 & \dfrac{z_1}{\cos(\alpha)} \end{bmatrix},$$

said second scaling means operates according to the matrix

$$\begin{bmatrix} z_2 \cdot \cos(\alpha) & 0 \\ \sin(\alpha) \cdot \cos(\alpha) & 1 \end{bmatrix}$$

and said shearing means operates according to the matrix

$$\begin{bmatrix} 1 & -\tan(\alpha) \\ 0 & 1 \end{bmatrix},$$

wherein $z_1$ is a scaling factor for the first dimension and $z_2$ is a scaling factor for the second dimension.

9. Apparatus according to one of the claims 6 to 8, wherein a rotation for an absolute value of more than 45° is performed in two subrotations:

    - a first subrotation for an absolute value of less than 45° by said first scaling means, said second scaling means and said shearing means, and
    - a second subrotation for +90°, -90° or 180° by separate transformation means for two-dimensional transformation.

Fig. 1 (prior art)

Fig. 2

IN_Image

v

u

OUT_Image

y

x

**Vertical
Zoom only**

**Vertical
Shearing only**

INTER_Image_0

v'

u'

INTER_Image_1

v''

u''

**Horizontal
Zoom/Shearing**

Fig. 3

Fig. 4

IN_Image

INTER_Image_0

v

v'

u

u'

Horizontal
Zoom only

Vertical
Zoom/Shearing

INTER_Image_1

OUT_Image

v''

y

u''

x

Horizontal
Shearing only

Fig. 5

**S1'**

**S2'**

**S3`**

*Horizontal*
*Zoom only*

*Vertical*
*Zoom/Shearing*

*Horizontal*
*Shearing only*

Line_IN

$$v' = v$$
$$u' = u \cdot \frac{ZoomH}{\cos(\alpha)}$$

$$v'' = v' \cdot ZoomV \cdot \cos(\alpha)$$
$$\quad - u' \cdot \sin(\alpha) \cdot \cos(\alpha)$$
$$u'' = u'$$

$$y = v''$$
$$x = u'' + v'' \cdot \tan(\alpha)$$

$$-180° \le \beta < -45° or$$
$$45° < \beta \le 180°$$
$$\rightarrow Storerotat\,ion$$

Fig. 6

Fig. 7

Fig. 8 (prior art)

Fig. 9

# Fig. 10

Rot_angle_in

S10

135° <= Rot_angle_in <= 180°

TRUE

S14

Rot_angle = Rot_angle_in - 180°

FALSE

S11

-180° <= Rot_angle_in <= -135°

TRUE

S15

Store Rotation 180°

S16

Rot_angle = Rot_angle_in + 180°

FALSE

S12

-135° < Rot_angle_in < -45°

TRUE

S17

Store Rotation -90°

S18

Rot_angle = Rot_angle_in + 90°

FALSE

S13

45° < Rot_angle_in < 135°

TRUE

S19

Store Rotation +90°

S20

Rot_angle = Rot_angle_in - 90°

FALSE

S21

Store Rotation 0°

S22

Rot_angle = Rot_angle_in

European Patent
Office

**EUROPEAN SEARCH REPORT**

Application Number

EP 06 30 1269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 215 915 B1 (REYZIN IGOR [US]) 10 April 2001 (2001-04-10) * column 1, line 37 - line 41 * * column 2, line 12 - line 17 * * column 2, line 35 - line 49 * * column 3, line 13 - column 4, line 18 * * column 12, line 14 - column 13, line 26 * * claims 1,8-10 * | 1-9 | INV. G06T3/00 |
| X | CATMULL E ET AL: "3-D TRANSFORMATIONS OF IMAGES IN SCANLINE ORDER" COMPUTER GRAPHICS, NEW YORK, NY, US, vol. 14, no. 3, 1 July 1980 (1980-07-01), pages 279-285, XP000562336 ISSN: 0097-8930 * the whole document * | 1-9 | |
| X | YING CHEN ET AL: "Shear-Resize Factorizations for Fast Image Registration" IMAGE PROCESSING, 2005. ICIP 2005. IEEE INTERNATIONAL CONFERENCE ON GENOVA, ITALY 11-14 SEPT. 2005, PISCATAWAY, NJ, USA,IEEE, 11 September 2005 (2005-09-11), pages 1120-1123, XP010851592 ISBN: 0-7803-9134-9 *section 2* | 1-3,5-9 | **TECHNICAL FIELDS SEARCHED (IPC)** G06T |

-/--

The present search report has been drawn up for all claims

| Place of search | Date of completion of the search | Examiner |
|---|---|---|
| The Hague | 7 May 2007 | Deltorn, Jean-Marc |

CATEGORY OF CITED DOCUMENTS

X : particularly relevant if taken alone
Y : particularly relevant if combined with another
　document of the same category
A : technological background
O : non-written disclosure
P : intermediate document

T : theory or principle underlying the invention
E : earlier patent document, but published on, or
　after the filing date
D : document cited in the application
L : document cited for other reasons

& : member of the same patent family, corresponding
　document

**EP 1 936 563 A1**

European Patent
Office

**EUROPEAN SEARCH REPORT**

Application Number

EP 06 30 1269

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | OWEN C B ET AL: "Bottleneck-free separable affine image warping" IMAGE PROCESSING, 1997. PROCEEDINGS., INTERNATIONAL CONFERENCE ON SANTA BARBARA, CA, USA 26-29 OCT. 1997, LOS ALAMITOS, CA, USA,IEEE COMPUT. SOC, US, vol. 1, 26 October 1997 (1997-10-26), pages 683-686, XP010254263 ISBN: 0-8186-8183-7 *sections 2 and 3* | 4 | |
| A | US 6 760 037 B2 (KALLAY MICHAEL [US] ET AL) 6 July 2004 (2004-07-06) * the whole document * | 1-9 | |
| | | | TECHNICAL FIELDS SEARCHED (IPC) |

The present search report has been drawn up for all claims

| Place of search | Date of completion of the search | Examiner |
|---|---|---|
| The Hague | 7 May 2007 | Deltorn, Jean-Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                          EP 06 30 1269

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2007

| Patent document cited in search report | | Publication date | Patent family member(s) | | Publication date |
|---|---|---|---|---|---|
| US 6215915 | B1 | 10-04-2001 | US | 6381375 B1 | 30-04-2002 |
| US 6760037 | B2 | 06-07-2004 | US | 2003174129 A1 | 18-09-2003 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0396311 B1


**Non-patent literature cited in the description**

- **GEORGE WOLBERG.** Digital Image Warping. IEEE Computer Society Press, 1994, 205-208